# EUROPÄISCHE PATENTANMELDUNG

(11) **EP 0 904 995 A2**
(43) Veröffentlichungstag der Anmeldung: **31.03.1999**
(21) Anmeldenummer: 98118022.7
(22) Anmeldetag: 23.09.1998
(51) Int. Cl.: B60R 21/26

(54) **Gasgenerator für eine Sicherheitseinrichtung**

(30) Priorität: 24.09.1997 DE 19742204
(71) Anmelder: TRW Airbag Systems GmbH & Co. KG, 84544 Aschau am Inn (DE)
(72) Erfinder: Müller, Werner, 84453 Mühldorf/Inn (DE); Ruckdeschel, Rolf, 87645 Schwangau (DE)
(74) Vertreter: Sulzbach, Werner, Dipl.-Chem. Dr.

(57) **Zusammenfassung**

Die Erfindung betrifft einen Gasgenerator für eine Sicherheitseinrichtung, insbesondere für ein Fahrzeuginsassen-Rückhaltesystem, mit einem Gehäuse aus isolierendem Material, eine in dem Gehäuse gebildeten Brennkammer mit Festtreibstoff zur Erzeugung von Heißgas und einem in das Gehäuse eingesetzten, in die Brennkammer hineinragenden Zünder. Der Gasgenerator ist dadurch gekennzeichnet, daß das Gehäuse im Bereich des Zünders leitfähig ausgebildet und der Festtreibstoff sowie, gegebenenfalls, die Brennkammer in einem leitfähigen Behälter angeordnet ist, wobei der leitfähige Bereich des Gehäuses und der leitfähige Behälter in leitender Verbindung miteinander stehen.

## Beschreibung

Die Erfindung betrifft einen Gasgenerator für eine Sicherheitseinrichtung, insbesondere für ein passives Fahrzeuginsassen-Rückhaltesystem.

Üblicherweise enthält ein solcher Gasgenerator ein Gehäuse mit einer darin gehildeten Brennkammer, in die ein pyrotechnischer Festtreibstoff eingefüllt ist. Zur Aktivierung des Festtreibstoffs ist ein Zünder vorgesehen, der in eine Öffnung des Gehäuses eingesetzt ist und in die Brennkammer hineinragt. In der die Brennkammer begrenzenden Wandung des Gehäuses befinden sich mehrere Abströmöffnungen für die beim Verbrennen des Treibmittels freigesetzten Gase. Diese Gase werden dann der Sicherheitseinrichtung zugeführt, insbesondere einem aufblasharen Gassack oder einem pneumatisch aktivierbaren kniefänger.

In Jüngster Zeit wurde vorgeschlagen, das Gasgeneratorgehäuse zur Gewichtseinsparung aus Kunststoff, insbesondere aus faserverstärktem Kunststoff auszubilden. Ein Vorschlag zur Konstruktion von Gasgeneratoren mit Kunststoffgehäuse ist beispielsweise der Diplomarbeit von Frau Karen Reichart mit dem Titel "Airbag-Gasgeneratorgehäuse aus faserverstärktem Kunststoff", Universität Rostock, Fachbereich Maschinenbau und Schiffstechnik. Institut für Konstruktionstechnik, veröffentlicht im September 1995, beschrieben. In dieser Arbeit wird bereits darauf hingewiesen, daß aus faserverstärktem Kunststoff gebildete Gasgeneratorgehäuse besondere Maßnahmen zur Verhinderung einer elektrostatischen Aufladung erfordern. In diesem Zusammenhang wird in der genannten Diplomarbeit vorgeschlagen, das Gasgeneratorgehäuse entweder mit einer Stahlummantelung zu versehen oder aber galvanisch zu metallisieren. Diese Maßnahmen können zwar den hohen Oberflächenwiderstand des Kunststoffgehäuses herabsetzen. Sie erfordern jedoch zusätzliche Bauteile und/oder Produktionsschritte bei der Herstellung des Gasgenerators und sind daher nicht kostengünstig zu realisieren.

Aus der DE-C2-38 24 162 ist ferner bekannt, den Festtreibstoff zum Schutz vor Feuchtigkeit mit Hilfe einer Aluminiumfolie luftdicht zu verpacken, wobei durch ein Evakuieren der Aluminiumfolie ein Erkennen von etwaigen Undichtigkeiten ermöglicht wird.

Es besteht daher weiterhin Bedarf an kostengünstig herstellbaren Gasgeneratoren mit einem Kunststoffgehäuse, deren pyrotechnische Komponenten vor Zündung durch elektrostatische Aufladung und deren Ableitung geschützt sind.

Die Erfindung stellt hierzu einen Gasgenerator für eine Sicherheitseinrichtung bereit, insbesondere einen Gasgenerator für ein Fahrzeuginsassen-Rückhaltesystem, der ein Gehäuse aus isolierendem Material, eine in dem Gehäuse gebildete Brennkammer mit Festtreibstoff zur Erzeugung von Heißgas und einen in das Gehäuse eingesetzten, in die Brennkammer hineinragenden Zünder umfaßt. Der erfindungsgemäße Gasgenerator ist dadurch gekennzeichnet, daß das Gehäuse im Bereich des Zünders leitfähig ausgebildet und der Festtreibstoff sowie, gegebenenfalls, die Brennkammer in einem leitfähigen Behälter angeordnet ist. wobei der leitfähige Bereich des Gehäuses und der leitfähige Behälter in leitender Verbindung miteinander stehen.

Mit der Erfindung wird ein Gasgenerator aus einem nichtmetallisehen, nichtleitenden Werkstoff verwirklicht, dessen pyrotechnische und gegebenenfalls elektronische Komponenten wirksam vor einer Zündung oder Zerstörung durch elektrostatische Aufladung und deren Ableitung geschützt sind. Darüber hinaus wird elektromagnetische Strahlung zuverlässig abgeschirmt und ein Schutz der pyrotechnischen Komponenten bei einer eventuellen mechanischen Zerstörung des Gehäuses erreicht.

Bei einer besonders bevorzugten Ausführungsform der Erfindung ist das Gasgeneratorgehäuse im Bereich des Zünders mit einem Leitlack umspritzt. In vorteilhafter Weise kann das Gasgeneratorgehäuse im Bereich des Zünders auch mit einem leitfähigen Einlegeteil versehen sein. Sehließlich wird als eine weitere erfindungsgemäße Ausführungsform vorgeschlagen, das Gasgeneratorgehäuse im Bereich des Zünders aus einem leitfähigen Kunststoff auszubilden. Derartige Kunststoffe sind den Fachkreisen bekannt und können je nach den an das Gasgeneratorgehäuse zu stellenden mechanischen Anforderungen ausgewählt werden.

Bei allen Ausführungsformen steht der den Treibstoff und/oder die Brennkammer enthaltende leitfähige Behälter bevorzugt in unmittelbarer, leitender Verbindung mit den leitfähigen Gehäuseteilen im Bereich des Zünders. Hierdurch wird verhindert, daß sich zwischen der Gehäuseoberfläche und dem Treibstoff eine Potentialdifferenz aufbauen kann, die über den Zünder abfließt und somit eine Zündung des Treibstoffs herbeiführt.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
Fig. 1 eine Schnittansicht einer Ausführungsform des erfindungsgemäßen Gasgenerators;
Fig. 2 eine Schnittansicht einer weiteren Ausführungsform des erfindungsgemäßen Gasgenerators; und
Fig. 3 eine Prinzipskizze des erfindungsgemäßen Gasgenerators im eingebauten Zustand.

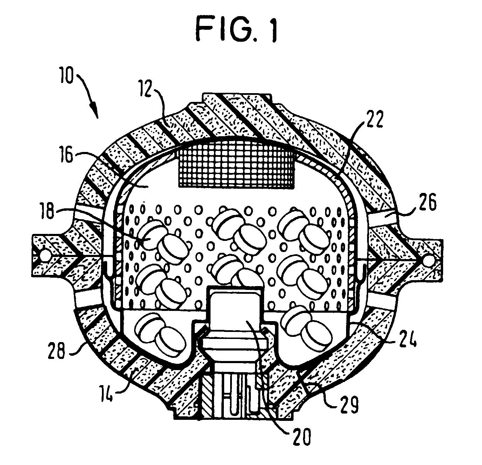

Der in Fig. 1 dargestellte Gasgenerator 10 weist ein aus einem Gehäuseoberteil 12 und einem Gehäuseunterteil 14 zusammengesetztes Gehäuse auf. Die beiden Gehäuseteile 12, 14 sind durch bekannte Verbindungsarten, wie z.B. Schweißen oder Verkleben, fest miteinander verbunden. Beide Gehäuseteile bestehen aus einem isolierenden Material, vorzugsweise einem mit Glasfasern und/oder Kohlefasern verstärkten Kunststoff, dessen Faseranteil besonders bevorzugt zwischen 30 und 50 Gew.-% beträgt. Besonders bevorzugt ist der Kunststoff ein glasfaserverstärktes Polyamid.

Im Inneren des Gasgeneratorgehäuses 12, 14 ist eine Brennkammer 16 mit darin enthaltenem Festtreibstoff 18 zur Erzeugung von Heißgas gebildet. Der Festtreibstoff liegt vorzugsweise in Tablettenform vor, er kann jedoch auch eine in der Technik bekannte andere Form aufweisen. In das Gehäuseunterteil 14 ist ein Zünder 20 eingesetzt, der in die Brennkammer 16 hineinragt.

Bei der hier dargestellten Ausführungsform sind sowohl der Festtreibstoff 18 als auch das die Brennkammer 16 umgrenzende Brennkammergehäuse 22 von einem Behälter 24 aus leitfähigem Material, vorzugsweise Aluminium, umgeben. Der Behälter 24 ist vorzugsweise eine luft- und feuchtigkeitsdichte Aluminiumfolie, die den Treibstoff und das Brennkammergehäuse umschließt und wenigstens teilweise evakuiert ist. Es ist jedoch auch denkbar, nur den Treibstoff in eine leitfähige Hülle aus Aluminium einzuschließen. In der Wandung des Gehäuses 12, 14 sind mehrere über den Umfang des Gehäuses verteilte Abströmöffnungen 26 vorgesehen, die in Strömungsverbindung mit dem Innenvolumen eines aufblasbaren Gassacks stehen.

Bei der in Fig. 1 dargestellten Ausführungsform ist das Gehäuseunterteil, oder zumindest ein an den Zünder 20 angrenzender Bereich des Gehäuseunterteils 14 mit einem Leitlack 28 umspritzt. Die leitfähige Aluminiumfolie 24 steht in direktem Kontakt mit dem auch auf der Innenseite des Gehäuseunterteils 14 aufgespritzten Leitlack 28 und steht somit in leitender Verbindung mit der Außenfläche des Gehäuseunterteils 14.

Bei einer weiteren in Fig. 1 gezeigten Ausführungsform ist bei der Herstellung des Gehäuseunterteils 14 ein leitendes, hier etwa U-förmig ausgebildetes Einlegeteil 29 im Bereich des Zünders 20 angeordnet und mit dem Kunststoffmaterial des Gehäuseunterteils 14 umspritzt. Auch bei dieser Ausführungform entsteht eine leitende Verbindung zwischen der im Bereich des Zünders 20 an der Innenfläche des Gehäuseunterteils 14 anliegenden Aluminiumfolie 24 und der Außenfläche des Gehäuseunterteils 14.

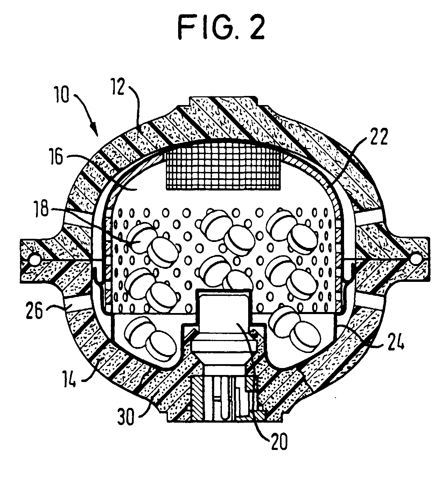

Fig. 2 zeigt schließlich eine weitere Ausführungsform des erfindungsgemäßen Gasgenerators dessen grundsätzlicher Aufbau mit dem in Fig. 1 gezeigten Gasgenerator übereinstimmt. Gleiche Bezugszahlen bezeichnen insoweit gleiche Merkmale. Bei der hier gezeigten Ausführungsform ist das Gehäuseunterteil, zumindest aber ein an den Zünder angrenzender Bereich des Gehäuseunterteils 14 aus einem leitfähigen Kunststoff 30 gebildet. Der den Treibstoff 18 und die Brennkammer 16 umhüllende Aluminiumbehälter 24 steht an der Innenfläche des Gehäuseunterteils 14 in direkter, leitender Verbindung mit dem leitenden Kunststoff 30. Somit kann das Auftreten von Potentialdifferenzen zwischen dem Treibstoff und dem Gasgeneratorgehäuse sowie ein Spannungsdurchbruch über den Zünder sicher verhindert werden.

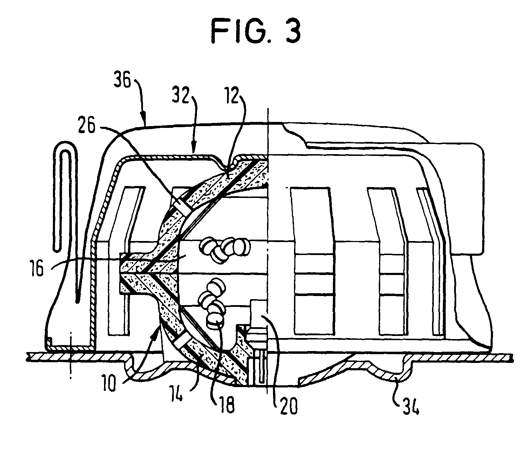

Fig. 3 zeigt eine Prinzipskizze des in einer Sicherheitseinrichtung eingebauten erfindungsgemäßen Gasgenerators. Der Gasgenerator 10 ist mit Hilfe einer Klemmvorrichtung 32 an der Stahlwanne 34 des Airbagmoduls befestigt. Die Klemmvorrichtung 32 hält gleichzeitig den über dem Gasgenerator 10 positionierten Luftsack 36 der Sicherheitseinrichtung. Wenn durch einen Sensor (hier nicht gezeigt) ein Unfall festgestellt wird, aktiviert ein von dem Sensor ausgehender Stromimpuls den Zünder 20. Dieser zündet den Festtreibstoff 18 in der Brennkammer 16 zur Erzeugung von Heißgas, welches über die Abströmöffnungen 26 dem Innenvolumen des Luftsacks 36 zugeführt wird.

Bei einer elektrostatischen Aufladung des aus einem nichtleitenden Kunststoff gefertigten Gasgeneratorgehäuses 12, 14 besteht die Gefahr, daß die auf der Gehäuseoberfläche aufgebaute Ladung entweder auf den Treibstoff 18 durchschlägt oder über den Zünder 20 abfließt. In beiden Fällen würde so ein ungewollter Treibstoffabbrand herbeigeführt. Das erfindungsgemäß zumindest im Bereich des Zünders 20 leitfähig ausgebildete Gehäuseunterteil, welches mit einem den Treibstoff 18 und/oder die Brennkammer 16 umhüllenden Behälter (hier nicht gezeigt in leitender Verbindung steht, gewährleistet jedoch einen Abfluß der auf dem Gasgeneratorgehäuse aufgebauten Ladung über die als Erdung anzusehende Stahlwanne 34 des Airbagmoduls. Somit kann die Gefahr eines Spannungsdurchbruchs und damit eines ungewollten Treibstoffabbrands wirksam vermieden werden.

## Patentansprüche

1. Gasgenerator für eine Sicherheitseinrichtung, insbesondere für ein Fahrzeuginsassen-Rückhaltesystem, mit einem Gehäuse aus isolierendem Material, einer in dem Gehäuse gebildeten Brennkammer mit Festtreibstoff zur Erzeugung von Heißgas und einem in das Gehäuse eingesetzten, in die Brennkammer hineinragenden Zünder, dadurch gekennzeichnet, daß das Gehäuse im Bereich des Zünders leitfähig ausgebildet und der Festtreibstoff sowie, gegebenenfalls, die Brennkammer in einem leitfähigen Behälter angeordnet ist, wobei der leitfähige Bereich des Gehäuses und der leitfähige Behälter in leitender Verbindung miteinander stehen.

2. Gasgenerator nach Anspruch 1, dadurch gekennzeichnet, daß das isolierende Material ein faserverstärkter Kunststoff ist.

3. Gasgenerator nach Anspruch 2, dadurch gekennzeichnet, daß der Kunststoff mit Glasfasern und/oder Kohlefasern verstärkt ist.

4. Gasgenerator nach Anspruch 2 oder 3, dadurch gekennzeichnet, daß der Faseranteil 30 bis 50 Gew.-% beträgt.

5. Gasgenerator nach einem der Ansprüche 2 bis 4, dadurch gekennzeichnet, daß der Kunststoff ein glasfaserverstärktes Polyamid ist.

6. Gasgenerator nach einem der vorhergehenden Ansprüche, dadurch gekennzeichnet, daß der leitfähige Behälter ein Aluminiumbehälter ist.

7. Gasgenerator nach Anspruch 6, dadurch gekennzeichnet, daß der leitfähige Behälter eine luft- und feuchtigkeitsdichte Aluminiumfolie ist.

8. Gasgenerator nach Anspruch 7, dadurch gekennzeichnet, daß die Aluminiumfolie den Treibstoff umschließt und wenigstens teilweise evakuiert ist.

9. Gasgenerator nach einem der Ansprüche 1 bis 8, dadurch gekennzeichnet, daß das Gehäuse im Bereich des Zünders mit einem Leitlack umspritzt ist.

10. Gasgenerator nach einem der Ansprüche 1 bis 8, dadurch gekennzeichnet, daß das Gehäuse im Bereich des Zünders mit einem leitfähigen Einlegeteil versehen ist.

11. Gasgenerator nach einem der Ansprüche 1 bis 8, dadurch gekennzeichnet, daß das Gehäuse im Bereich des Zünders aus einem leitfähigen Kunststoff gebildet ist.
